# EUROPEAN PATENT APPLICATION

(11) **EP 4 019 447 A1**
(43) Date of publication of application: **29.06.2022**
(21) Application number: 21210673.6
(22) Date of filing: 26.11.2021
(51) Int. Cl.: B66B 1/46

(54) **METHOD FOR TRIGGERING AUTOMATIC ELEVATOR CALLS**

(30) Priority: 24.12.2020 US 202063130496 P
(71) Applicant: Otis Elevator Company, Farmington, Connecticut 06032 (US)
(72) Inventor: WONG, Sam Thieu, Bridgeport, Connecticut 06606 (US); YBANEZ, Vincent Refuerzo, West Haven, Connecticut 06516 (US)
(74) Representative: Dehns

(57) **Abstract**

A method of generating an elevator call (380) using a mobile device (400) including: detecting a first advertisement (290) emitted by a first beacon (250), the first beacon being located at a first location and the first beacon is configured to emit the first advertisement a first selected range away from the first beacon; determining that an individual (190) will be boarding an elevator system (101) based on at least the first location of the first beacon; and transmitting the elevator call to a dispatcher (350) of the elevator system based on determining that the individual will be boarding the elevator system or authorizing a previously placed elevator call to the dispatcher based on determining that the individual will be boarding the elevator system.

## Description

### BACKGROUND

The subject matter disclosed herein relates generally to the field of elevator systems, and specifically to a method and apparatus for generating elevator calls for elevator systems.

Elevator systems are typically only able to generate an elevator call based on an individual manually entering an elevator call without being prompted.

### BRIEF SUMMARY

According to an embodiment, a method of generating an elevator call using a mobile device is provided. The method including: detecting a first advertisement emitted by a first beacon, the first beacon being located at a first location and the first beacon is configured to emit the first advertisement a first selected range away from the first beacon; determining that an individual will be boarding an elevator system based on at least the first location of the first beacon; and transmitting the elevator call to a dispatcher of the elevator system based on determining that the individual will be boarding the elevator system or authorizing a previously placed elevator call to the dispatcher based on determining that the individual will be boarding the elevator system.

In addition to one or more of the features described herein, or as an alternative, further embodiments may include that the first location is located at a moving walkway or an escalator, the escalator extending from a lower landing to an upper landing.

In addition to one or more of the features described herein, or as an alternative, further embodiments may include that the first location is located at a bottom of the escalator or a top of the escalator, the bottom of the escalator being located at the lower landing and the top of the escalator being located at the upper landing.

In addition to one or more of the features described herein, or as an alternative, further embodiments may include that the first location is located at an elevator bank of the elevator system, the elevator bank being located at the upper landing.

In addition to one or more of the features described herein, or as an alternative, further embodiments may include that the first location is located at a start of the moving walkway or an end of the moving walkway.

In addition to one or more of the features described herein, or as an alternative, further embodiments may include that the first location is located at an end of the moving walkway.

In addition to one or more of the features described herein, or as an alternative, further embodiments may include detecting a second advertisement emitted by a second beacon, the second beacon being located at a second location and the second beacon is configured to emit the second advertisement a second selected range away from the second beacon; and determining that the individual will be boarding the elevator system based on at least the first location of the first beacon and the second location of the second beacon.

In addition to one or more of the features described herein, or as an alternative, further embodiments may include that the first location is located at a bottom of an escalator and the second location is located a top of the escalator.

In addition to one or more of the features described herein, or as an alternative, further embodiments may include that the first location is located at a bottom of an escalator and the second location is located at an elevator bank of the elevator system, the bottom of the escalator being located at a lower landing and the elevator bank being located at an upper landing.

In addition to one or more of the features described herein, or as an alternative, further embodiments may include that the first location is located at a top of an escalator located and the second location is located at an elevator bank of the elevator system, the top of the escalator being located at an upper landing and the elevator bank being located at the upper landing.

In addition to one or more of the features described herein, or as an alternative, further embodiments may include that the first location is located at a start of a moving walkway and the second location is located an end of the moving walkway.

In addition to one or more of the features described herein, or as an alternative, further embodiments may include that the first location is located at a start of a moving walkway and the second location is located at an elevator bank of the elevator system.

In addition to one or more of the features described herein, or as an alternative, further embodiments may include that the first location is located at an end of a moving walkway and the second location is located at an elevator bank of the elevator system.

In addition to one or more of the features described herein, or as an alternative, further embodiments may include: detecting a second advertisement emitted by a second beacon, the second beacon being located at a second location and the second beacon is configured to emit the second advertisement a second selected range away from the second beacon; detecting a third advertisement emitted by a third beacon, the third beacon being located at a third location and the third beacon is configured to emit the third advertisement a third selected range away from the third beacon; and determining that the individual will be boarding the elevator system based on at least the first location of the first beacon, the second location of the second beacon, and the third location of the third beacon.

In addition to one or more of the features described herein, or as an alternative, further embodiments may include that the first location is located at a bottom of an escalator, the second location being located at top of the escalator, and the third location is located at an elevator bank of the elevator system, the bottom of the escalator being located at a lower landing, wherein the top of the escalator and the elevator bank are located on an upper landing.

In addition to one or more of the features described herein, or as an alternative, further embodiments may include that the first location is located at a start of a moving walkway, the second location being located at an end of the moving walkway, and the third location is located at an elevator bank of the elevator system.

In addition to one or more of the features described herein, or as an alternative, further embodiments may include that the elevator call is automatically transmitted, using an application, based on determining that the individual will be boarding the elevator system, the application being operated through the mobile device.

In addition to one or more of the features described herein, or as an alternative, further embodiments may include prompting the individual to enter the elevator call via an application based on determining that the individual will be boarding the elevator system, the application being operated through the mobile device.

According to another embodiment, a system for generating an elevator call using a mobile device is provided. The system including: a processor; and a memory including computer-executable instructions that, when executed by the processor, cause the processor to perform operations, the operations including: detecting a first advertisement emitted by a first beacon, the first beacon being located at a first location and the first beacon is configured to emit the first advertisement a first selected range away from the first beacon; determining that an individual will be boarding an elevator system based on at least the first location of the first beacon; and transmitting the elevator call to a dispatcher of the elevator system based on determining that the individual will be boarding the elevator system or authorizing a previously placed elevator call to the dispatcher based on determining that the individual will be boarding the elevator system.

According to another embodiment, a computer program product embodied on a non-transitory computer readable medium is provided. The computer program product including instructions that, when executed by a processor, cause the processor to perform operations including: detecting a first advertisement emitted by a first beacon, the first beacon being located at a first location and the first beacon is configured to emit the first advertisement a first selected range away from the first beacon; determining that an individual will be boarding an elevator system based on at least the first location of the first beacon; and transmitting an elevator call to a dispatcher of the elevator system based on determining that the individual will be boarding the elevator system or authorizing a previously placed elevator call to the dispatcher based on determining that the individual will be boarding the elevator system.

Technical effects of embodiments of the present disclosure include detecting when an individual enters wireless signal range of a beacon and generating an elevator call based on the location of the beacon

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2A illustrates a schematic view of an elevator call system used to generate elevator calls based on a detected location of an individual in relation to an escalator, in accordance with an embodiment of the disclosure;
FIG. 2B illustrates a schematic view of an elevator call system used to generate elevator calls based on a detected location of an individual in relation to a moving walkway, in accordance with an embodiment of the disclosure;
FIG. 3 is a schematic illustration of a mobile device used in the elevator call system of FIG. 2A or FIG. 2B, in accordance with an embodiment of the disclosure; and
FIG. 4 is a flow chart of method of generating an elevator call using an elevator call system of FIG. 2A or FIG. 2B, in accordance with an embodiment of the disclosure

### DETAILED DESCRIPTION

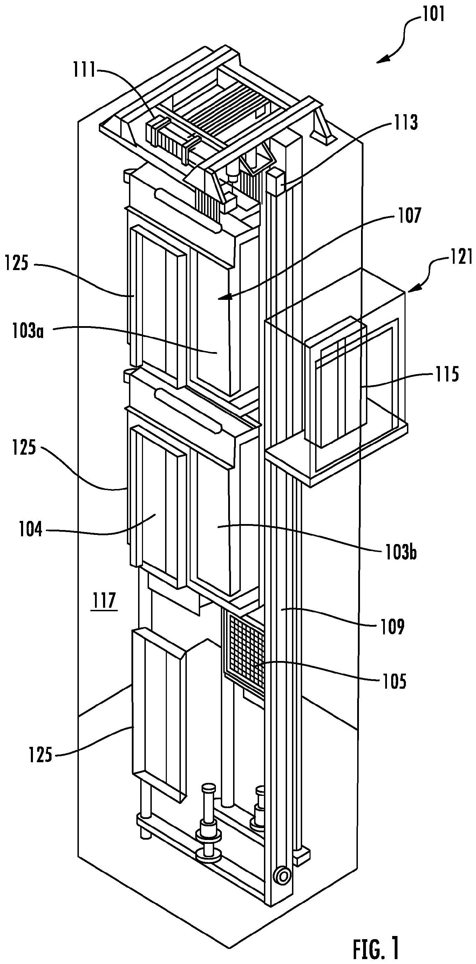

FIG. 1 is a perspective view of an elevator system 101 including one or more elevator cars 103a, 103b, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The elevator system 101 of FIG. 1 is a double deck elevator system 101 and includes two elevator cars 103a, 103b. it is understood that while the elevator system 101 of FIG. 1 is a double deck elevator system, the embodiment disclosed herein may also be applicable to single deck elevator system with one elevator car. The counterweight 105 is configured to balance a load of the elevator cars 103a, 103b and is configured to facilitate movement of the elevator cars 103a, 103b concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator cars 103a, 103b and the counterweight 105. The position reference system 113 may be mounted on a fixed part at the top of the elevator shaft 117, such as on a support or guide rail, and may be configured to provide position signals related to a position of the elevator cars 103a, 103b within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator cars 103a, 103b. For example, the controller 115 may provide drive signals to the machine 111 to control the acceleration, deceleration, leveling, stopping, etc. of the elevator cars 103a, 103b. The controller 115 may also be configured to receive position signals from the position reference system 113 or any other desired position reference device. When moving up or down within the elevator shaft 117 along guide rail 109, the elevator cars 103a, 103b may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator cars 103a, 103b within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor, pinched wheel propulsion or any other means of propulsion to impart motion to an elevator car. Embodiments may also be employed in ropeless elevator systems using a hydraulic lift to impart motion to an elevator car. FIG. 1 is merely a non-limiting example presented for illustrative and explanatory purposes.

The elevator system 101 also includes one or more elevator doors 104. The elevator door 104 may be integrally attached to an elevator car 103a, 103b and/or the elevator door 104 may be located on a landing 125 of the elevator system 101. Embodiments disclosed herein may be applicable to both an elevator door 104 integrally attached to the elevator car 103a, 103b and/or an elevator door 104 located on a landing 125 of the elevator system 101. The elevator door 104 opens to allow passengers to enter and exit the elevator car 103a, 103b.

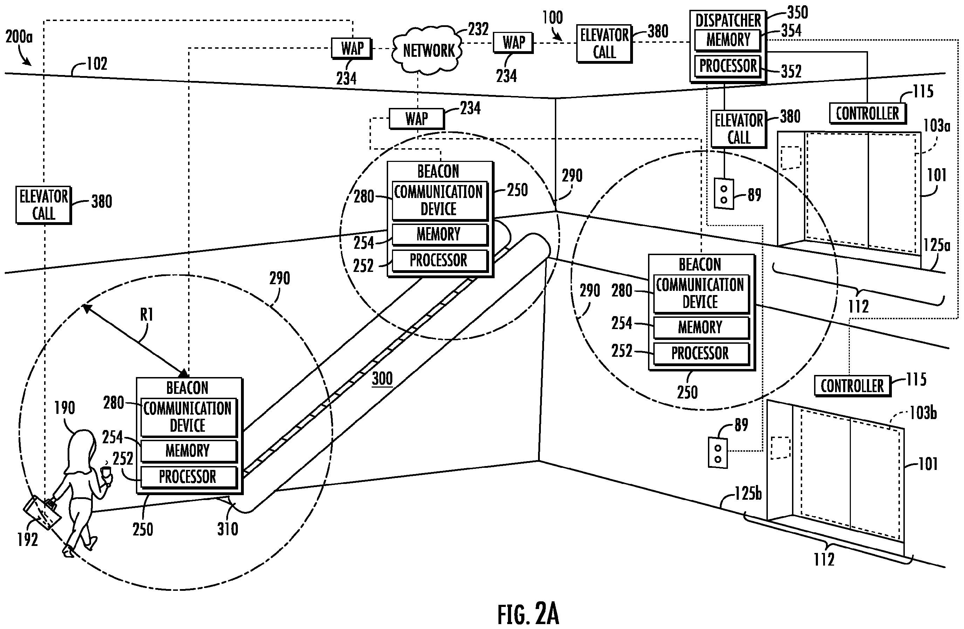

Referring now to FIG. 2A, with continued reference to FIG. 1, an elevator call system 200a is illustrated, in accordance with an embodiment of the present disclosure. It should be appreciated that, although particular systems are separately defined in the schematic block diagrams, each or any of the systems may be otherwise combined or separated via hardware and/or software. The elevator call system 200a includes and/or is in wired or wireless communication with one or more beacons 250. It is understood that three beacons 250 are illustrated, the embodiments disclosed herein may be applicable to an elevator call system 200a having one or more beacons 250. The beacon 250 may be configured to act as an extension of the building elevator system 100 by collecting data for the building elevator system 101 and transmitting elevator data 380 to a dispatcher 350 of the building elevator system 100.

As illustrated in FIG. 2A, a building elevator system 100 within a building 102 may include one or more individual elevator systems 101 organized in elevator banks 112 on different landings 125a, 125b. It is understood that while a single elevator system 101 is illustrated in each elevator bank 112, the elevator banks 112 may comprise any number of elevator systems 101. The elevator systems 101 illustrated in FIG. 2A are double-deck elevator system, which may include an upper elevator car 103a and a lower elevator car 103b. The upper elevator car 103a may serve an upper landing 125a and the lower elevator car 103b may serve a lower landing 125b.

The elevator systems 101 includes elevator cars 103a, 103b. It is understood that while one elevator system 101 is utilized for exemplary illustration, embodiments disclosed herein may be applied to building elevator systems 100 having one or more elevator systems 101. Further, the elevator system 101 illustrated in FIG. 2A is organized into an elevator bank 112. Each of the elevator banks 112 may contain one or more elevator systems 101.

The upper landing 125a and the lower landing 125b in the building 102 of FIG. 2A may each have an elevator call device 89 located proximate the elevator system 101. The elevator call device 89 transmits an elevator call 382 to a dispatcher 350 of the building elevator system 100. It should be appreciated that, although the dispatcher is separately defined in the schematic block diagrams, the dispatcher 350 may be combined via hardware and/or software in any controller 115 or other device. The elevator call 382 may include the source of the elevator call 382. The elevator call device 89 may include a destination entry option that includes the destination of the elevator call 382. The elevator call device 89 may be a push button and/or a touch screen and may be activated manually or automatically. For example, the elevator call 382 may be sent by an individual 190.

The elevator call device 89 may also be a mobile device 400 configured to transmit an elevator call 382 and an individual 190 may be in possession of said mobile device 400 to transmit the elevator call 382. The mobile device 400 may be a smart phone, smart watch, tablet, laptop, or any other mobile device known to one of skill in the art.

The controllers 115 can be combined, local, remote, cloud, etc. The dispatcher 350 may be local, remote, cloud, etc. The dispatcher 350 is in communication with the controller 115 of each elevator system 101. Alternatively, there may be a single controller that is common to all of the elevator systems 101 and controls all of the elevator system 101, rather than two separate controllers 115, as illustrated in FIG. 2A. The dispatcher 350 may be a 'group' software that is configured to control the elevator system 101.

The dispatcher 350 is configured to control and coordinate operation of one or more elevator systems 101. The dispatcher 350 may be an electronic controller including a processor 352 and an associated memory 354 comprising computer-executable instructions that, when executed by the processor 352, cause the processor 352 to perform various operations. The processor 352 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 354 may be but is not limited to a random access memory (RAM), read only memory (ROM), or other electronic, optical, magnetic or any other computer readable medium.

The dispatcher 350 is in communication with the elevator call devices 89 of the building elevator system 100. The dispatcher 350 is configured to receive the elevator call 382 transmitted from the elevator call device 89, beacon 250, and/or the mobile device 400. The dispatcher 350 is configured to manage the elevator calls 380 coming in from the elevator call device 89, beacon 250, and/or the mobile device 400 then command one or more elevator systems 101 to respond to elevator call 382.

The beacon 280 may be configured to emit an advertisement 290 (i.e., wireless signal) from a communication device 280 using short-range wireless protocols. Short-range wireless protocols may include, but not are limited to, Bluetooth, Wi-Fi, HaLow (801.11ah), zWave, ZigBee, or Wireless M-Bus. In an embodiment, the advertisement 290 is a Bluetooth wireless signal. The advertisement 290 may be emitted from the communication device 290 at a selected frequency within a selected range R1 of the beacon 280. The advertisement 290 is detected by the mobile device 400 once the mobile device 400 is within the selected range of the beacon 280. Once the mobile device 400 detects the advertisement 280 the mobile device 400 may automatically transmit an elevator call 380 to the dispatcher 350 or the mobile device 400 may prompt the individual 190 to enter an elevator call 380 through the mobile device 400. Alternatively, once the mobile device 400 detects the advertisement 280 a previously placed elevator call 380 to the dispatcher 350 may be authorized or granted by the elevator system 101.

There may be a beacon 280 located at or proximate a bottom 310 of an escalator 300, a beacon 280 located at or proximate a top 320 of the escalator 300, and/or a beacon 280 located at or proximate the elevator bank 112. The escalator 300 is a moving stairway configured to convey individuals 190 from the lower landing 125b to the upper landing 125a. The bottom 310 of the escalator 300 is located at the lower landing 125b and the top 320 of the escalator 300 is located at the upper landing 125a. The escalator 300 extends from the bottom 310 to the top 320.

A beacon 280 may be located at the bottom 310 of the escalator 300 to confirm when the individual 190 is boarding the escalator 300 to move from the lower landing 125b to the upper landing 125a. A beacon 280 may be located at the top 320 of the escalator 300 to confirm when the individual 190 is leaving the escalator 300 to enter the upper landing 125a. A beacon 280 may be located at the elevator bank 112 on the upper landing to confirm when the individual 190 is proximate the elevator bank 112, which may confirm that the individual intends to use the elevator system 101 on the upper landing 125a.

The beacon 280 includes a processor 252 and an associated memory 254 including computer-executable instructions that, when executed by the processor 252, cause the processor 252 to perform various operations. The processor 252 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 254 may be a storage device such as, for example, a random access memory (RAM), read only memory (ROM), or other electronic, optical, magnetic or any other computer readable medium.

The beacon 280 includes a communication module 280 configured to allow the beacon 280 to communicate with the dispatcher 350. The communication module 280 is capable of transmitting and receiving data to and from the dispatcher 350 through a computer network 232. The computer network 232 may be a cloud computing network. In another embodiment, the communication module 280 is capable of transmitting and receiving data to and from the dispatcher 350 by communicating directly with the dispatcher 350.

The communication module 280 may communicate to the computer network 232 through a wireless access protocol device (WAP) 234 using short-range wireless protocols. Short-range wireless protocols may include, but not are limited to, Bluetooth, Wi-Fi, HaLow (801.11ah), zWave, ZigBee, or Wireless M-Bus. Alternatively, the communication module 280 may communicate directly with the computer network 232 using long-range wireless protocols. Long-range wireless protocols may include, but are not limited to, cellular, LTE (NB-IoT, CAT M1), LoRa, satellite, Ingenu, or SigFox.

The communication module 280 may communicate to the dispatcher 350 through a WAP 234 using short-range wireless protocols. Alternatively, the communication module 280 may communicate directly with the dispatcher 350 using short-range wireless protocols.

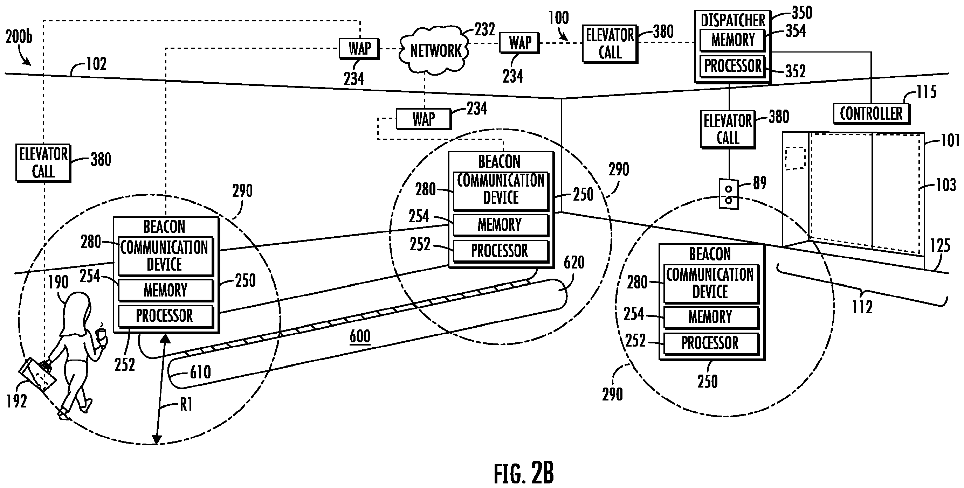

Referring now to FIG. 2B, with continued reference to FIG. 1, an elevator call system 200b is illustrated, in accordance with an embodiment of the present disclosure. It should be appreciated that, although particular systems are separately defined in the schematic block diagrams, each or any of the systems may be otherwise combined or separated via hardware and/or software. The elevator call system 200b includes and/or is in wired or wireless communication with one or more beacons 250. It is understood that three beacons 250 are illustrated, the embodiments disclosed herein may be applicable to an elevator call system 200b having one or more beacons 250. The beacon 250 may be configured to act as an extension of the building elevator system 100 by collecting data for the building elevator system 101 and transmitting elevator data 380 to a dispatcher 350 of the building elevator system 100.

As illustrated in FIG. 2B, a building elevator system 100 within a building 102 may include one or more individual elevator systems 101 organized in elevator banks 112. It is understood that while a single elevator system 101 is illustrated in each elevator bank 112, the elevator banks 112 may comprise any number of elevator systems 101. The elevator system 101 illustrated in FIG. 2B may be a single deck elevator system (e.g., one elevator car) or a double-deck elevator systems. The elevator system of FIG. 2B includes an elevator car 103. The elevator car 103 may serve a landing 125 where a moving walkway 600 (i.e., travelators) is located.

It is understood that while one elevator system 101 is utilized for exemplary illustration, embodiments disclosed herein may be applied to building elevator systems 100 having one or more elevator systems 101. Further, the elevator system 101 illustrated in FIG. 2B is organized into an elevator bank 112. The elevator bank112 may contain one or more elevator systems 101.

The landing 125 in the building 102 of FIG. 2B may have an elevator call device 89 located proximate the elevator system 101. The elevator call device 89 transmits an elevator call 382 to a dispatcher 350 of the building elevator system 100. It should be appreciated that, although the dispatcher is separately defined in the schematic block diagrams, the dispatcher 350 may be combined via hardware and/or software in any controller 115 or other device. The elevator call 382 may include the source of the elevator call 382. The elevator call device 89 may include a destination entry option that includes the destination of the elevator call 382. The elevator call device 89 may be a push button and/or a touch screen and may be activated manually or automatically. For example, the elevator call 382 may be sent by an individual 190.

The elevator call device 89 may also be a mobile device 400 configured to transmit an elevator call 382 and an individual 190 may be in possession of said mobile device 400 to transmit the elevator call 382. The mobile device 400 may be a smart phone, smart watch, laptop, or any other mobile device known to one of skill in the art.

The controller 115 can be local, remote, cloud, etc. The dispatcher 350 may be local, remote, cloud, etc. The dispatcher 350 is in communication with the controller 115 of each elevator system 101. The dispatcher 350 may be a 'group' software that is configured to control the elevator system 101.

The dispatcher 350 is configured to control and coordinate operation of one or more elevator systems 101. The dispatcher 350 may be an electronic controller including a processor 352 and an associated memory 354 comprising computer-executable instructions that, when executed by the processor 352, cause the processor 352 to perform various operations. The processor 352 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 354 may be but is not limited to a random access memory (RAM), read only memory (ROM), or other electronic, optical, magnetic or any other computer readable medium.

The dispatcher 350 is in communication with the elevator call devices 89 of the building elevator system 100. The dispatcher 350 is configured to receive the elevator call 382 transmitted from the elevator call device 89, beacon 250, and/or the mobile device 400. The dispatcher 350 is configured to manage the elevators calls 380 coming in from the elevator call device 89, beacon 250, and/or the mobile device 400 then command one or more elevator systems 101 to respond to elevator call 382.

The beacon 280 may be configured to emit an advertisement 290 (i.e., wireless signal) from a communication device 280 using short-range wireless protocols. Short-range wireless protocols may include, but not are limited to, Bluetooth, Wi-Fi, HaLow (801.11ah), zWave, ZigBee, or Wireless M-Bus. In an embodiment, the advertisement 290 is a Bluetooth wireless signal. The advertisement 290 may be emitted from the communication device 290 at a selected frequency within a selected range R1 of the beacon 280. The advertisement 290 is detected by the mobile device 400 once the mobile device 400 is within the selected range of the beacon 280. Once the mobile device 400 detects the advertisement 280 the mobile device 400 may automatically transmit an elevator call 380 to the dispatcher 350 or the mobile device 400 may prompt the individual 190 to enter an elevator call 380 through the mobile device 400. Alternatively, once the mobile device 400 detects the advertisement 280 a previously placed elevator call 380 to the dispatcher 350 may be authorized or granted by the elevator system 101.

There may be a beacon 280 located at or proximate a start 610 of the moving walkway 600, a beacon 280 located at or proximate an end 620 of the moving walkway 600, and/or a beacon 280 located at or proximate the elevator bank 112. The moving walkway 600 is a moving floor/conveyer belt configured to convey individuals 190 from the start 610 of the moving walkway 600 to the end 620 of the moving walkway. The start 610 of the moving walkway 600 and the end 620 of the moving walkway 600 are located on the same landing 125. The moving walkway 600 extends from the start 610 to the end 620.

A beacon 280 may be located at the start 610 of the moving walkway 600 to confirm when the individual 190 is boarding the moving walkway 600 to move from the start 610 to the end 620. A beacon 280 may be located at the end 620 of the moving walkway 600 to confirm when the individual 190 is leaving the moving walkway 600. A beacon 280 may be located at the elevator bank 112 to confirm when the individual 190 is proximate the elevator bank 112, which may confirm that the individual intends to use the elevator system 101.

The beacon 280 includes a processor 252 and an associated memory 254 including computer-executable instructions that, when executed by the processor 252, cause the processor 252 to perform various operations. The processor 252 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 254 may be a storage device such as, for example, a random access memory (RAM), read only memory (ROM), or other electronic, optical, magnetic or any other computer readable medium.

The beacon 280 includes a communication module 280 configured to allow the beacon 280 to communicate with the dispatcher 350. The communication module 280 is capable of transmitting and receiving data to and from the dispatcher 350 through a computer network 232. The computer network 232 may be a cloud computing network. In another embodiment, the communication module 280 is capable of transmitting and receiving data to and from the dispatcher 350 by communicating directly with the dispatcher 350.

The communication module 280 may communicate to the computer network 232 through a wireless access protocol device (WAP) 234 using short-range wireless protocols. Short-range wireless protocols may include, but not are limited to, Bluetooth, Wi-Fi, HaLow (801.11ah), zWave, ZigBee, or Wireless M-Bus. Alternatively, the communication module 280 may communicate directly with the computer network 232 using long-range wireless protocols. Long-range wireless protocols may include, but are not limited to, cellular, LTE (NB-IoT, CAT M1), LoRa, satellite, Ingenu, or SigFox.

The communication module 280 may communicate to the dispatcher 350 through a WAP 234 using short-range wireless protocols. Alternatively, the communication module 280 may communicate directly with the dispatcher 350 using short-range wireless protocols.

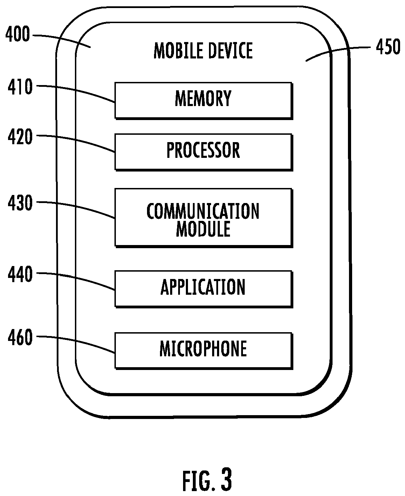

Referring now to FIG. 3, with continued reference to FIGS. 1 and 2, a mobile device 400 is illustrated in accordance with an embodiment of the present disclosure. The mobile device 400 may belong to an individual 190, such as, for example, a passenger or potential passenger of the elevator system 101. The mobile device 400 may be a mobile computing device that is typically carried by a person, such as, for example a smart phone, cellular phone, PDA, smart watch, tablet, laptop, or similar device known to one of skill in the art. The mobile device 400 may include a display device 450. The mobile device 400 may include a processor 420, memory 410, a communication module 430, and an application 440, as shown in FIG. 3.

The processor 420 can be any type or combination of computer processors, such as a microprocessor, microcontroller, digital signal processor, application specific integrated circuit, programmable logic device, and/or field programmable gate array. The memory 410 is an example of a non-transitory computer readable storage medium tangibly embodied in the mobile device 400 including executable instructions stored therein, for instance, as firmware. The communication module 430 may implement one or more communication protocols, such as, for example, short-range wireless protocols and long-range wireless protocols. The communication module 430 may be in communication with at least one of the computing network 232, the communication device 280, or the WAP 234. In an embodiment, the communication module 430 may be in communication with the dispatcher 350 through the computing network 250 using at least one of short-range wireless protocols or long-range wireless protocols. Short-range wireless protocols may include but are not limited to Bluetooth, Wi-Fi, HaLow (801.11ah), zWave, ZigBee, or Wireless M-Bus. Long-range wireless protocols 204 may include but are not limited to cellular, LTE (NB-IoT, CAT M1), LoRa, satellite, Ingenu, or SigFox.

The application 440 on the mobile device 400 may generate an alert to be displayed on the display device 450 when the advertisement 290 of the beacon 250 is detected. The beacon 250 may be detected by the communication module 430 of the mobile device 400. The alert on the display device 450 may prompt the individual 190 to enter an elevator call 380 through the application 440. The individual 190 may enter the elevator call 380 using a keypad, physical button, or touchscreen of the mobile device 400. The display device 450 may also act as a touch screen. The individual 190 may also enter the elevator call 380 via a voice command that is received by a microphone 460 of the mobile device 400.

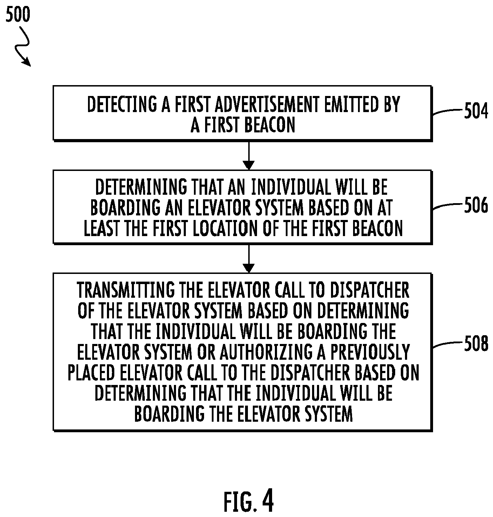

Referring now to FIG. 4, while referencing components of FIGS. 1-3. FIG. 4 shows a flow chart of method 500 of generating an elevator call 380 using a mobile device 400 of FIG. 2A-3, in accordance with an embodiment of the disclosure. In an embodiment, the method 500 is performed by the elevator call system 200a, 200b of FIG. 2A or 2B. In an embodiment, the method 500 is performed by the mobile device 400 of FIGS. 2 and 3.

At block 504, a first advertisement 290 emitted by a first beacon 250 is detected. The first beacon 250 being located at a first location and the first beacon 250 is configured to emit the first advertisement 290 a first selected range R1 away from the first beacon 250.

In an embodiment, the first location is located at an escalator 300. The escalator 300 extending from a lower landing 125b to an upper landing 125a. In one embodiment, the first location is located at a bottom 310 of the escalator 300. The bottom 310 of the escalator 300 being located at the lower landing 125b. In another embodiment, the first location is located at a top 320 of the escalator 300. The top 320 of the escalator 300 being located at the upper landing 125a. In another embodiment, the first location is located at an elevator bank 112 of the elevator system 101, the elevator bank 112 being located at the upper landing 125a.

In an embodiment, the first location is located at moving walkway 600. The moving walkway 600 extending from a start 610 to an end 620. In one embodiment, the first location is located at a start 610 of the moving walkway. In another embodiment, the first location is located at an end 620 of the moving walkway 600. In another embodiment, the first location is located at an elevator bank 112 of the elevator system 101.

At block 506, it is determined that an individual 190 will be boarding an elevator system 101 based on at least the first location of the first beacon 250.

At block 508, the elevator call 380 is transmitted to a dispatcher of the elevator system 101 based on determining that the individual 190 will be boarding the elevator system 101 or a previously placed elevator call 380 to the dispatcher 350 is authorized based on determining that the individual will be boarding the elevator system 101. The elevator call 380 may be automatically transmitted, using an application 440, based on determining that the individual 190 will be boarding the elevator system 101. Alternatively, an individual 190 may be prompted to enter the elevator call 380 via an application 440 based on determining that the individual 190 will be boarding the elevator system 101. The application 440 being operated through the mobile device 400.

The method 500 may further comprise that a second advertisement 290 emitted by a second beacon 250 is detected. The second beacon 250 being located at a second location and the second beacon 250 is configured to emit the second advertisement 290 a second selected range R1 away from the second beacon 250. The method 500 may further comprise that it is determined that the individual 190 will be boarding the elevator system 101 based on at least the first location of the first beacon 250 and the second location of the second beacon 250.

In an embodiment, at least one of the first location or the second location is located at an escalator 300. In an embodiment, the first location is located at a bottom 310 of the escalator 300. In an embodiment, the second location is located at a top 320 of the escalator 300. In another embodiment, the first location is located at a top 320 of the escalator 300. In yet another embodiment, the second location is located at an elevator bank 112 of the elevator system 101.

In an embodiment, at least one of the first location or the second location is located at a moving walkway 600. In an embodiment, the first location is located at a start 610 of the moving walkway 600. In an embodiment, the second location is located at an end 620 of the moving walkway 600. In another embodiment, the first location is located at an end 620 of the moving walkway 600. In yet another embodiment, the second location is located at an elevator bank 112 of the elevator system 101.

The method 500 may further comprise that a second advertisement 290 emitted by a second beacon 250 is detected. The second beacon 250 being located at a second location and the second beacon 250 is configured to emit the second advertisement 290 a second selected range R1 away from the second beacon 250. The method 500 may further comprise that a third advertisement 290 emitted by a third beacon 250. The third beacon 250 being located at a third location and the third beacon 250 is configured to emit the third advertisement 290 a third selected range R1 away from the third beacon 250. The method 500 may further comprise that it is determined that the individual 190 will be boarding the elevator system 101 based on at least the first location of the first beacon 250, the second location of the second beacon 250, and the third location of the third beacon 250.

In an embodiment, at least one of the first location or the second location is located at an escalator 300. In an embodiment, the first location is located at a bottom 310 of the escalator 300. In an embodiment, the second location is located at a top 320 of the escalator 300. In an embodiment, the third location is located at an elevator bank 112 of the elevator system 101.

In an embodiment, at least one of the first location or the second location is located at a moving walkway 600. In an embodiment, the first location is located at a start 610 of the moving walkway 600. In an embodiment, the second location is located at an end of the moving walkway 600. In an embodiment, the third location is located at an elevator bank 112 of the elevator system 101.

While the above description has described the flow process of FIG. 4 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of generating an elevator call using a mobile device, the method comprising:
detecting a first advertisement emitted by a first beacon, the first beacon being located at a first location and the first beacon is configured to emit the first advertisement a first selected range away from the first beacon;
determining that an individual will be boarding an elevator system based on at least the first location of the first beacon; and
transmitting the elevator call to a dispatcher of the elevator system based on determining that the individual will be boarding the elevator system or authorizing a previously placed elevator call to the dispatcher based on determining that the individual will be boarding the elevator system.

2. The method of claim 1, wherein the first location is located at a moving walkway or an escalator, the escalator extending from a lower landing to an upper landing.

3. The method of claim 2, wherein the first location is located at a bottom of the escalator or a top of the escalator, the bottom of the escalator being located at the lower landing and the top of the escalator being located at the upper landing.

4. The method of claim 1, wherein the first location is located at an elevator bank of the elevator system, the elevator bank being located at the upper landing.

5. The method of claim 2, wherein the first location is located at a start of the moving walkway or an end of the moving walkway.

6. The method of claim 2, wherein the first location is located at an end of the moving walkway.

7. The method of claim 1, further comprising:
detecting a second advertisement emitted by a second beacon, the second beacon being located at a second location and the second beacon is configured to emit the second advertisement a second selected range away from the second beacon; and
determining that the individual will be boarding the elevator system based on at least the first location of the first beacon and the second location of the second beacon.

8. The method of claim 7, wherein the first location is located at a bottom of an escalator and the second location is located a top of the escalator, or
wherein the first location is located at a bottom of an escalator and the second location is located at an elevator bank of the elevator system, the bottom of the escalator being located at a lower landing and the elevator bank being located at an upper landing, or
wherein the first location is located at a top of an escalator located and the second location is located at an elevator bank of the elevator system, the top of the escalator being located at an upper landing and the elevator bank being located at the upper landing, or
wherein the first location is located at a start of a moving walkway and the second location is located an end of the moving walkway, or
wherein the first location is located at a start of a moving walkway and the second location is located at an elevator bank of the elevator system, or
wherein the first location is located at an end of a moving walkway and the second location is located at an elevator bank of the elevator system.

9. The method of claim 1, further comprising:
detecting a second advertisement emitted by a second beacon, the second beacon being located at a second location and the second beacon is configured to emit the second advertisement a second selected range away from the second beacon;
detecting a third advertisement emitted by a third beacon, the third beacon being located at a third location and the third beacon is configured to emit the third advertisement a third selected range away from the third beacon; and
determining that the individual will be boarding the elevator system based on at least the first location of the first beacon, the second location of the second beacon, and the third location of the third beacon.

10. The method of claim 9, wherein the first location is located at a bottom of an escalator, the second location being located at top of the escalator, and the third location is located at an elevator bank of the elevator system, the bottom of the escalator being located at a lower landing, wherein the top of the escalator and the elevator bank are located on an upper landing, or
wherein the first location is located at a start of a moving walkway, the second location being located at an end of the moving walkway, and the third location is located at an elevator bank of the elevator system.

11. The method of any preceding claim, wherein the elevator call is automatically transmitted, using an application, based on determining that the individual will be boarding the elevator system, the application being operated through the mobile device.

12. The method of any preceding claim, further comprising;
prompting the individual to enter the elevator call via an application based on determining that the individual will be boarding the elevator system, the application being operated through the mobile device.

13. A system for generating an elevator call using a mobile device, the system comprising:
a processor; and
a memory comprising computer-executable instructions that, when executed by the processor, cause the processor to perform operations, the operations comprising:
detecting a first advertisement emitted by a first beacon, the first beacon being located at a first location and the first beacon is configured to emit the first advertisement a first selected range away from the first beacon;
determining that an individual will be boarding an elevator system based on at least the first location of the first beacon; and
transmitting the elevator call to a dispatcher of the elevator system based on determining that the individual will be boarding the elevator system or authorizing a previously placed elevator call to the dispatcher based on determining that the individual will be boarding the elevator system.

14. A computer program product embodied on a non-transitory computer readable medium, the computer program product including instructions that, when executed by a processor, cause the processor to perform operations comprising:
detecting a first advertisement emitted by a first beacon, the first beacon being located at a first location and the first beacon is configured to emit the first advertisement a first selected range away from the first beacon;
determining that an individual will be boarding an elevator system based on at least the first location of the first beacon; and
transmitting an elevator call to a dispatcher of the elevator system based on determining that the individual will be boarding the elevator system or authorizing a previously placed elevator call to the dispatcher based on determining that the individual will be boarding the elevator system.
